# EUROPÄISCHE PATENTSCHRIFT

(11) **EP 0 849 858 B1**
(45) Veröffentlichungstag und Bekanntmachung des Hinweises auf die Patenterteilung: **10.04.2002**
(21) Anmeldenummer: 97121340.0
(22) Anmeldetag: 04.12.1997
(51) Int. Cl.: H02K 1/20, H02K 5/20

(54) **Elektrische luftgekühlte Maschine**
Electric air-cooled machine
Machine électrique refroidie par air

(30) Priorität: 17.12.1996 DE 19652537
(43) Veröffentlichungstag der Anmeldung: 24.06.1998
(73) Patentinhaber: SIEMENS AKTIENGESELLSCHAFT, 80333 München (DE)
(72) Erfinder: Pfannschmidt, Bernd, Dipl.-Ing. (FH), 90574 Rosstal (DE); Hannes, Manfred, Dipl.-Ing. (FH), 94227 Zwiesel (DE)

(56) Entgegenhaltungen:
- WO-A-93/20609
- DE-A- 3 504 782
- DE-A- 4 443 427
- PATENT ABSTRACTS OF JAPAN vol. 6, no. 226 (E-141) [11] , 11.November 1982 & JP 57 129139 A (FUJITSU FANUC KK), 11.August 1982,
- PATENT ABSTRACTS OF JAPAN vol. 9, no. 56 (E-302), 12.März 1985 & JP 59 194644 A (FANUC KK), 5.November 1984,
- PATENT ABSTRACTS OF JAPAN vol. 95, no. 10, 30.November 1995 & JP 07 177689 A (FANUC LTD), 14.Juli 1995,

## Beschreibung

Die Erfindung betrifft eine elektrische luftgekühlte Maschine mit einem Maschinengehäuse, mit einem im Gehäuse angeordneten Stator mit Statorwicklung, mit einem Rotor und einer Rotorwicklung sowie einem Luftspalt zwischen Stator und Rotor, mit einem Lufteintritt und einem Luftaustritt sowie einer Luftführung vom Lufteintritt, insbesondere über einen Lüfter, zum Luftaustritt, wobei der Kühlluftstrom sowohl durch den Luftspalt als auch über Kühlkanäle des Stators und über Kühlkanäle des Rotors geführt ist. Eine elektrische Maschine dieser Art ist aus der EP-A-0 261 295 bekannt.

Aus der DE 44 43 427 A1 ist eine elektrische Maschine bekannt, bei der am Ständerumfang von einem Kühlmedium durchströmte Primärkühlkanäle für einen Außenkühlkreislauf vorgesehen sind, welche Maschine ferner einen aus am Ständerumfang angeordneten, mit den Primärkühlkanälen in Wärmeaustausch dienenden Sekundärkühlkanäle und aus dem Läufer axial durchsetzende Läuferkühlkanälen bestehenden Innenkühlkreislauf aufweist, in welchem als Kühlmedium Luft umgewälzt ist. Eine ausreichende Kühlung der Maschine ohne weitere Leitvorrichtungen soll dadurch erreicht werden, dass auf einer Läuferstirnseite sich axial erstreckende radial fördernde Lüfterflügel am Läufer vorgesehen sind und axial vor diesen Lüfterflügel eine sich bis zur Welle des Läufers erstreckende geschlossene Scheibe angeordnet ist. Dabei ist die Luftführung relativ kompliziert und der konstruktive Aufwand im Vergleich zu herkömmlichen Bauarten hoch.

Aufgabe der Erfindung ist es, eine luftgekühlte Maschine dieser Bauart bezüglich der Luftkühlung zu verbessern und den Wirkungsgrad der Maschine zu erhöhen.

Gemäß der Erfindung wird dies dadurch erreicht, daß die Luftführung im Stator gebildet wird durch über den gesamten Umfang des Stators angeordnete axiale Kühlkanäle in Verbindung mit weiteren axialen Kühlkanälen, die in den Eckbereichen des Maschinengehäuses vorgesehen sind, wobei der Kühlluftstrom sowohl durch den Rotor den Luftspalt zwischen Stator und Rotor und gleichzeitig durch zwei parallele Wege im Stator führt. In vorteilhafter Weise werden damit die Eckbereiche des Maschinengehäuses in das Kühlsystem der Maschine einbezogen.

Für eine vorteilhafte Auslegung der Jochhöhe des Stators sind die Kühlkanäle des Stators wenigstens in den Umfangsabschnitten des Stators, die den Gehäuseseitenwänden benachbart sind, mit ovalem oder abgeflacht ovalem Querschnitt ausgebildet. Damit ist die erreichbare Jochhöhe des Stators für den Magnetfluß vorteilhaft auslegbar, wobei ein kleinerer Bauraum trotz großer Jochhöhe für einen hohen Wirkungsgrad möglich ist.

Für eine kostengünstige Bauform ist vorgesehen, daß die weiteren Kühlkanäle aus Ausformungen des aus Metallguß bestehenden Maschinengehäuses und dem darin eingesetzten Statorpaket gebildet sind.

Weitere vorteilhafte Ausgestaltungen der Erfindung ergeben sich aus den Patentansprüchen.

Die Erfindung wird anhand von Ausführungsbeispielen und der Zeichnung näher erläutert.

Es zeigen:

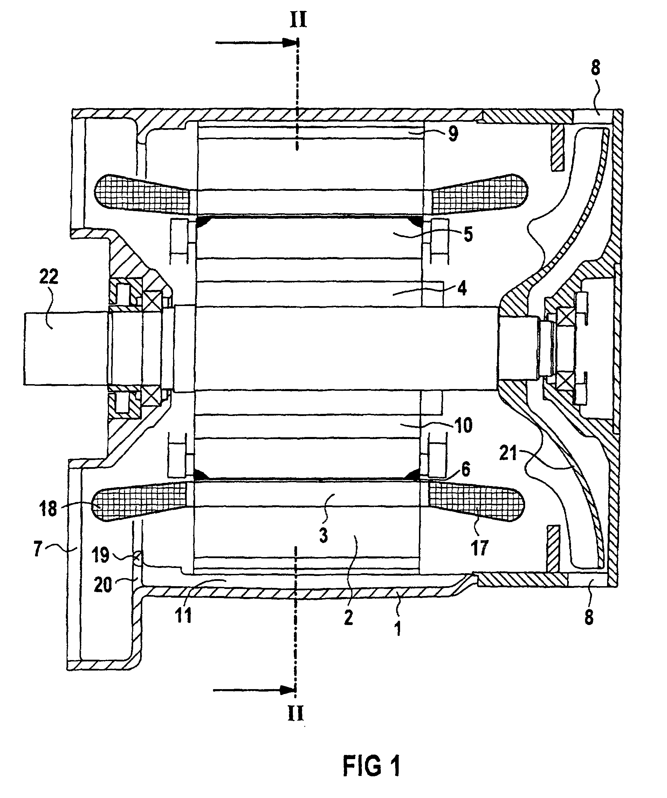

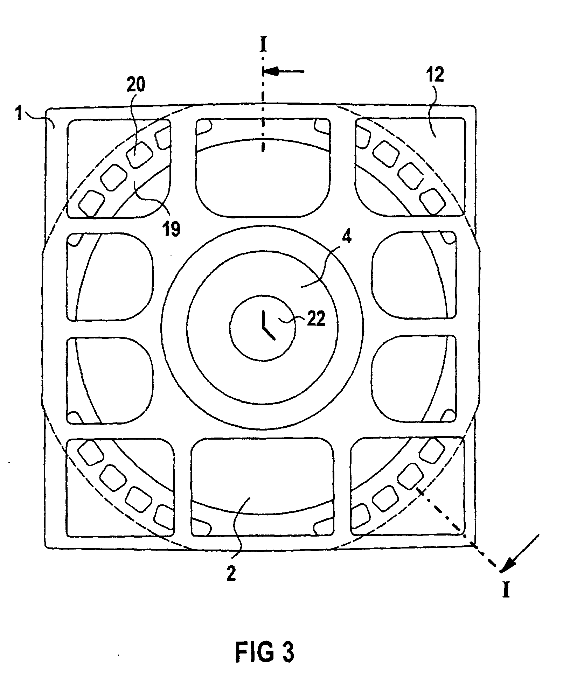

- Figur 1: eine luftgekühlte elektrische Maschine gemäß der Erfindung im Axialschnitt I-I nach Figur 3,
- Figur 2: eine konzeptionelle Darstellung des Gehäuses mit Stator der erfindungsgemäßen Maschine im Querschnitt II-II nach Figur 1,
- Figur 3: einen Querschnitt durch Stator und Gehäuse der elektrischen Maschine, wobei in den Eckbereichen des Maschinengehäuses eine Blende mit Kühlluftdurchbrüchen vorgesehen ist.

Die als elektrischer Motor, insbesondere für Bahnantriebe, vorgesehene luftgekühlte Maschine besitzt ein Maschinengehäuse 1, beispielsweise aus Stahl- oder Aluminiumguß, mit einem darin eingesetzten Stator 2, dessen Statorwicklung mit 3 bezeichnet ist. Auf der Rotorwelle 22 sitzt ein Rotor 4 mit Rotorwicklung 5. Zwischen dem Stator 2 und dem Rotor 4 ist ein axialer Luftspalt 6 angeordnet, der von Kühlluft durchströmt wird. Zur Kühlung des Stators 2 sind von der Kühlluft durchströmte axiale Kühlkanäle 9 und zur Kühlung des Rotors 4 sind ebenfalls axiale Kühlkanäle 10 vorgesehen.

Für den Kühllufteinlaß ist ein Kühllufteintritt 7 an der einen Stirnseite des Gehäuses 1 vorgesehen, während sich ein Luftaustritt 8 im gegenüberliegenden Gehäuseabschnitt befindet. Zur Förderung der Kühlluft ist auf der Rotorwelle 22 im Bereich des Luftaustritts 8 ein Sauglüfter 21 angeordnet.

Für die axiale Kühlung des Stators 2 sind ferner neben den über den Umfang des Stators angeordneten axialen Kühlkanälen 9 zusätzliche Kühlkanäle 11 vorgesehen, die sich in den Eckbereichen 12 des Maschinengehäuses 1 befinden und wobei die darin geführte Kühlluft den Statormantel in axialer Richtung beaufschlagt. Die Kühlluftführung mit den Luftströmen vom Lufteintritt 7 durch die Maschine zum Luftaustritt 8 ist durch Pfeile gekennzeichnet.

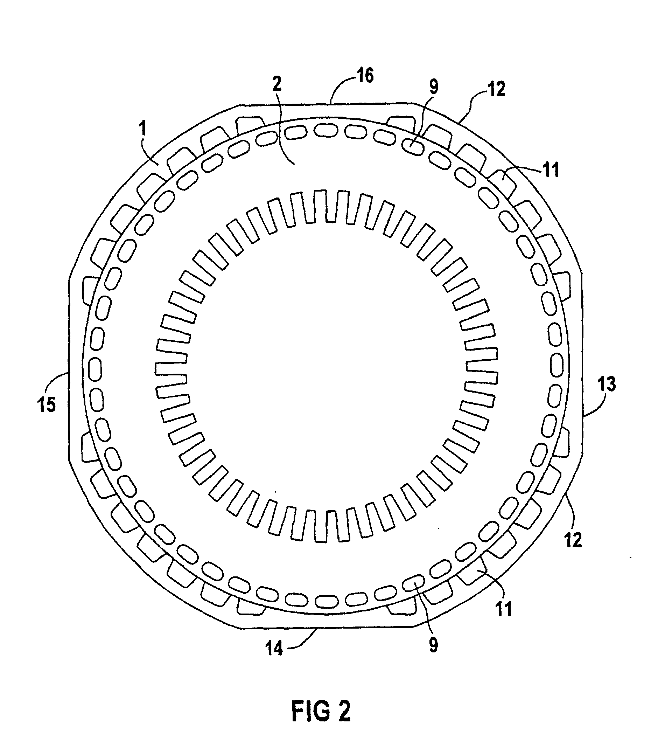

Eine besonders vorteilhafte Maschinenbauform mit einer für den Wirkungsgrad bedeutenden großen Jochhöhe für den Magnetfluß wird dadurch erreicht, daß die Kühlkanäle 9 des Stators 2 wenigstens in den Umfangsabschnitten des Stators, die den Gehäuseseitenwänden 13 bis 16 benachbart sind, mit ovalem oder abgeflacht ovalem Querschnitt ausgebildet sind. Außerdem können die weiteren Kühlkanäle 11 aus Ausformungen des aus Metallguß bestehenden Maschinengehäuses 1 und dem darin eingesetzten Statorpaket 2 gebildet werden. Wie sich aus dem Querschnitt der Figur 2 ergibt, weisen diese zusätzlichen Kühlkanäle 11 in den Eckbereichen 12 des Maschinengehäuses 1 unterschiedliche Querschnittsgröße und Querschnittsform auf.

Zur wirkungsvollen Kühlung der Wickelköpfe 17, 18 des Statorpaketes 2 wird einerseits der eine Wickelkopf 18 direkt vom angesaugten Frischluftstrom gekühlt, während der Wickelkopf 17 an der Abluftseite zusätzlich von der Kühlluft aus den Kühlkanälen 11 beaufschlagt wird.

Um den abluftseitigen Wickelkopf 17 wirkungsvoller zu kühlen, ist vorgesehen, daß die Kühlluft aus den Kühlkanälen 11 in Richtung auf den Wickelkopf 17 umgelenkt wird. Die Wickelköpfe 18 des Stators 2 werden dadurch wirkungsvoller gekühlt, daß der axiale Lufteintritt 7 einen rechteckigen Querschnitt aufweist und daß der Luftstrom zum Motorinnenraum durch eine Blende 19 geführt ist. Diese Blende 19 weist in den Eckbereichen des Maschinengehäuses 1 Durchbrüche oder Durchtritte 20 zum direkten Einströmen der Kühlluft in die Kühlkanäle 11 auf.

In vorteilhafter Ausführung sind die weiteren Kühlkanäle 11 des Gehäuses 1 mittig in radialer Anordnung über den Kühlkanälen 9 des Stators 2 vorgesehen, wobei eine sichere Drehmomentübertragung zwischen Stator 2 und Gehäuse 1 erreicht wird.

## Patentansprüche

1. . Elektrische luftgekühlte Maschine mit einem Maschinengehäuse (1), mit einem im Gehäuse (1) angeordneten Stator (2) mit Statorwicklung (3), mit einem Rotor (4) und einer Rotorwicklung (5) sowie einem Luftspalt (6) zwischen Stator und Rotor, mit einem Lufteintritt (7) und einem Luftaustritt (8) sowie einer Luftführung vom Lufteintritt, insbesondere über einen Lüfter (21) zum Luftaustritt (8), wobei der Kühlluftstrom sowohl durch den Luftspalt (6) als auch über Kühlkanäle (9) des Stators (2) und über Kühlkanäle (10) des Rotors (4) geführt ist, **dadurch gekennzeichnet, dass** die Luftführung im Stator (2) gebildet wird durch über den gesamten Umfang des Stators angeordnete axiale Kühlkanäle (9) in Verbindung mit weiteren axialen Kühlkanälen (11), die in den Eckbereichen (12) des Maschinengehäuses (1) vorgesehen sind, wobei der Kühlluftstrom sowohl durch den Rotor (4), den Luftspalt (6) zwischen Stator und Rotor und gleichzeitig durch zwei parallele Wege im Stator (2) führt.

2. Elektrische Maschine nach Anspruch 1, **dadurch gekennzeichnet, daß** die Kühlkanäle (9) des Stators (2) wenigstens in den Umfangsabschnitten des Stators, die den Gehäuseseitenwänden (13-16) benachbart sind, mit ovalem oder abgeflacht ovalem Querschnitt ausgebildet sind.

3. Elektrische Maschine nach Anspruch 1, **dadurch gekennzeichnet, daß** die weiteren Kühlkanäle (11) aus Ausformungen des aus Metallguß bestehenden Maschinengehäuses (1) und dem darin eingesetzten Statorpaket (2) gebildet sind.

4. Elektrische Maschine nach Anspruch 1, **dadurch gekennzeichnet, daß** die Kühlkanäle (11) in den Eckbereichen (12) des Maschinengehäuses (1) unterschiedliche Querschnittsgröße und Querschnittsform aufweisen.

5. Elektrische Maschine nach Anspruch 1, **dadurch gekennzeichnet, daß** die in den Kühlkanälen (11) geführte Kühlluft direkt am Statorpaket (2) entlang geführt ist.

6. Elektrische Maschine nach einem der Ansprüche 1 bis 5, **dadurch gekennzeichnet, daß** auf der Rotorwelle ein Lüfter (21), ein Sauglüfter od.dgl. sitzt, der den angesaugten Kühlluftstrom durch die Kühlkanäle (10) des Rotors (4), durch den Luftspalt (6) zwischen Rotor (4) und Stator (2) und durch die Kühlkanäle (9) des Stators in axialer Richtung durch die Maschine saugt und daß ein paralleler Kühlluftstrom durch die Kühlkanäle (11) gesaugt wird.

7. Elektrische Maschine nach einem der Ansprüche 1 bis 6, **dadurch gekennzeichnet, daß** der Wickelkopf (18) des Stators (2) vom angesaugten Frischluftstrom beaufschlagt und der Wickelkopf (17) des Stators (2) auf der Abluftseite durch den Kühlluftstrom aus den Kühlkanälen (11) wirkungsvoll beaufschlagbar ist.

8. Elektrische Maschine nach Anspruch 7, **dadurch gekennzeichnet, daß** abluftseitig von den Kühlkanälen (11) die Kühlluft in Richtung zum Wickelkopf (17) des Stators (2) umgelenkt ist.

9. Elektrische Maschine nach einem der Ansprüche 1 bis 8, **dadurch gekennzeichnet, daß** der axiale Lufteintritt (7) einen rechteckigen Querschnitt aufweist und daß zur Kühlung der Wickelköpfe (18) der Luftdurchtritt zum Motorinnenraum durch eine Blende (19) geführt ist, wobei die Blende in den Eckbereichen Durchtritte (20) zum direkten Einströmen der Kühlluft in die Kühlkanäle (11) aufweist.

10. Elektrische Maschine nach einem der Ansprüche 1 bis 9, **dadurch gekennzeichnet, daß** die weiteren axialen Kühlkanäle (11) in radialer Anordnung mittig über den Kühlkanälen (9) des Stators (2) vorgesehen sind.

## Claims

1. Electric air-cooled machine with a machine casing (1), with a stator (2) which is disposed in the casing (1) and has a stator winding (3), with a rotor (4) and a rotor winding (5) and also an air gap (6) between the stator and rotor, with an air inlet (7) and an air outlet (8) and also an air guide from the air inlet, particularly via a fan (21), to the air outlet (8), the flow of cooling air being guided both through the air gap (6) and also via cooling ducts (9) in the stator (2) and via cooling ducts (10) in the rotor (4), **characterised in that** the air guide in the stator (2) is formed by axial cooling ducts (9) disposed over the entire periphery of the said stator, in conjunction with additional axial cooling ducts (11) which are provided in the corner regions (12) of the machine casing (1), the flow of cooling air leading both through the rotor (4) and the air gap (6) between the stator and rotor and, at the same time, through two parallel paths in the stator (2).

2. Electric machine according to claim 1, **characterised in that** the cooling ducts (9) in the stator (2) are constructed, at least in those peripheral portions of the stator which adjoin the side walls (13-16) of the casing, with an oval or flattened-oval cross-section.

3. Electric machine according to claim 1, **characterised in that** the additional cooling ducts (11) are formed from contoured portions of the machine casing (1), which consists of cast metal, and from the stator bundle (2) inserted therein.

4. Electric machine according to claim 1, **characterised in that** the cooling ducts (11) in the corner regions (12) of the machine casing (1) have different cross-sectional sizes and cross-sectional shapes.

5. Electric machine according to claim 1, **characterised in that** the cooling air guided in the cooling ducts (11) is guided directly along the stator bundle (2).

6. Electric machine according to one of claims 1 to 5, **characterised in that** there is seated on the rotor shaft a fan (21), an extractor fan or the like, which sucks the sucked-in flow of cooling air through the machine in the axial direction, through the cooling ducts (10) in the rotor (4), through the air gap (6) between the rotor (4) and stator (2) and through the cooling ducts (9) in the stator, and that a parallel flow of cooling air is sucked through the cooling ducts (11).

7. Electric machine according to one of claims 1 to 6, **characterised in that** the winding overhang (18) of the stator (2) is impinged upon by the sucked-in flow of fresh air, and the winding overhang (17) of the stator (2) on the exhaust-air side can be impinged upon effectively by the flow of cooling air from the cooling ducts (11).

8. Electric machine according to claim 7, **characterised in that**, on the exhaust-air side of the cooling ducts (11), the cooling air is deflected in the direction towards the winding overhang (17) of the stator (2).

9. Electric machine according to one of claims 1 to 8, **characterised in that** the axial air inlet (7) has a rectangular cross-section, and that, for the purpose of cooling the winding overhangs (18), the passage of air towards the interior space of the motor is guided by a screen (19), the said screen having passages (20) in the corner regions for the direct influx of the cooling air into the cooling ducts (11).

10. Electric machine according to one of claims 1 to 9, **characterised in that** the additional cooling ducts (11) are provided in a radial arrangement centrally above the cooling ducts (9) in the stator (2).

## Revendications

1. Machine électrique à refroidissement par de l'air, comprenant une enveloppe (1) de machine, un stator (2) disposé dans l'enveloppe et ayant un enroulement (3) statorique, un rotor (4) et un enroulement (5) rotorique ainsi qu'un entrefer (6) entre le stator et le rotor, une entrée (7) d'air et une sortie (8) d'air ainsi qu'un passage d'air de l'entrée d'air à la sortie (8) d'air, notamment en passant par un ventilateur (21), le courant d'air froid passant tant dans l'entrefer (6) qu'également par des canaux (9) de refroidissement du stator (2) et par des canaux (10) de refroidissement du rotor (4), **caractérisée en ce que** le passage d'air dans le stator (2) est formé par des canaux (9) axiaux de refroidissement, disposés sur tout le pourtour du stator et communiquant avec d'autres canaux (11) axiaux de refroidissement, qui sont prévus dans les zones (12) de coin de l'enveloppe (1) de la machine, le courant d'air de refroidissement passant tant dans le rotor (4) et dans l'entrefer (6) entre le stator et le rotor, qu'en même temps par deux trajets parallèles dans le stator (2).

2. Machine électrique suivant la revendication 1, **caractérisée en ce que** les canaux (9) de refroidissement du stator (2) sont, au moins dans les parties du pourtour du stator qui sont voisines des parois (13-16) de l'enveloppe, constitués en ayant une section transversale ovale ou ovale aplatie.

3. Machine électrique suivant la revendication 1, **caractérisée en ce que** les autres canaux (11) de refroidissement sont formés par des déformations de l'enveloppe (1) de la machine en métal coulé, et par le paquet (2) statorique qui y est inséré.

4. Machine électrique suivant la revendication 1, **caractérisée en ce que** les canaux (11) de refroidissement ont dans les zones (12) de coin de l'enveloppe (1) de la machine, des dimensions et une forme de la section transversale qui sont différentes.

5. Machine électrique suivant la revendication 1, **caractérisée en ce que** l'air de refroidissement passant dans les canaux (11) de refroidissement, passe directement le long du paquet (2) statorique.

6. Machine électrique suivant l'une des revendications 1 à 5, **caractérisée en ce qu'**il y a sur l'arbre du rotor, un ventilateur (21), un ventilateur aspirant ou analogue, qui aspire le courant d'air de refroidissement aspiré, passant dans les canaux (10) de refroidissement du rotor (4), dans l'entrefer (6) entre le rotor (4) et le stator et dans les canaux (9) de refroidissement du stator, en direction axiale dans la machine et **en ce qu'**un courant d'air de refroidissement parallèle est aspiré dans les canaux (11) de refroidissement.

7. Machine électrique suivant l'une des revendications 1 à 6, **caractérisée en ce que** la tête (18) de bobine du stator (2) est alimentée par un courant d'air frais aspiré, et la tête (17) de bobine du stator (2) peut être alimentée d'une manière efficace du côté de l'air évacué, par le courant d'air de refroidissement sortant des canaux (11) de refroidissement.

8. Machine électrique suivant la revendication 7, **caractérisée en ce que** l'air de refroidissement est, du côté de la sortie d'air, dévié en direction de la tête (17) de bobine du stator (2), par les canaux (11) de refroidissement.

9. Machine électrique suivant l'une des revendications 1 à 8, **caractérisée en ce que** l'entrée (7) axiale d'air a une section transversale rectangulaire et **en ce que** pour le refroidissement des têtes (18) de bobine, le passage d'air vers l'intérieur du moteur, s'effectue en passant dans un obturateur (19), l'obturateur ayant dans les zones de coin des passages (20) d'entrée directe de l'air de refroidissement dans les canaux (11) de refroidissement.

10. Machine électrique suivant l'une des revendications 1 à 9, **caractérisée en ce que** les autres canaux (11) axiaux de refroidissement sont prévus suivant une disposition radiale, au milieu, au-dessus des canaux (9) de refroidissement du stator (2).
